# EUROPEAN PATENT APPLICATION

(11) **EP 4 786 101 A1**
(43) Date of publication of application: **05.08.2026**
(21) Application number: 26153962.1
(22) Date of filing: 26.01.2026
(51) Int. Cl.: B25B 5/12, B64F 5/10

(54) **TOGGLE CLAMP TOOL SYSTEM AND METHOD**

(30) Priority: 29.01.2025 US 202519040841
(71) Applicant: The Boeing Company, Arlington, VA 22202 (US)
(72) Inventor: Restivo, Justin A., Arlington, VA, 22202 (US)
(74) Representative: Hoffmann Eitle

(57) **Abstract**

A toggle clamp tool system (100) includes a pair of toggle clamps (102; 104, 106) and a tool (300). Each toggle clamp (102; 104, 106) includes a clamp base (108) and a clamp arm (140). The clamp base (108) is configured to be pivotably coupled to a mounting point (406) on a structure (400). The clamp arm (140) is pivotably coupled at one end to the clamp base (108) at an arm-base pivot point (406), and has a clamp foot (144) on an opposite end for bearing against a surface (404) of the structure (400). The clamp arm (140) is movable from a disengaged position (178) into an over-center position (368) from which the clamp arm (140) is unable to pivot away from the surface (404) and back toward the disengaged position (178). The tool (300) is configured to be removably mounted on the clamp base (108) of each of the toggle clamps (102; 104, 106) when coupled to the structure (400).

## Description

### FIELD

The present disclosure relates generally to mechanical clamps and, more particularly, to a toggle clamp tool system configured to be removably attached to a structure.

### BACKGROUND

The manufacturing of large commercial aircraft typically involves attaching the wings to the fuselage at a side-of-body joint on each side of the fuselage. During the wing-to-fuselage attachment process, a temporary gap may exist between the wing and the side of the fuselage. Due to its height above the factory floor, this temporary gap poses a fall hazard to technicians performing manufacturing operations at the side-of-body joint, such as drilling holes and installing fasteners. These manufacturing operations can generate foreign object debris (FOD) such as drill shavings and fastener components (e.g., nuts, bolts, washers, etc.), which must be collected and contained to avoid contamination of the aircraft.

As can be seen, there exists a need in the art for a system and method for covering the temporary gap between the fuselage and the wing during aircraft assembly. Ideally, the system for covering the gap also provides a means for collecting FOD that may be generated during manufacturing operations performed during aircraft assembly.

### SUMMARY

The above-noted needs associated with covering temporary gaps of a structure are specifically addressed and alleviated by the present disclosure which provides a toggle clamp tool system having a pair of toggle clamps and a tool. Each toggle clamp includes a clamp base and a clamp arm. The clamp base is configured to be pivotably coupled to a mounting point on a structure. The clamp arm is pivotably coupled at one end to the clamp base at an arm-base pivot point, and has a clamp foot on an opposite end for bearing against a surface of the structure. The clamp arm is movable from a disengaged position into an over-center position from which the clamp arm is unable to pivot away from the surface and back toward the disengaged position. The tool is configured to be removably mounted on the clamp base of each of the toggle clamps when coupled to the structure.

Also disclosed is a toggle clamp tool system for use during aircraft assembly. The toggle clamp tool system has a pair of toggle clamps and a platform. Each toggle clamp has a clamp base and a clamp arm. The clamp has a clamp attach fitting configured to be removably coupled to a mounting point on a fuselage of the aircraft. The clamp arm is pivotably coupled on one end to the clamp base at an arm-base pivot point and having a clamp foot on an opposite end for bearing against a surface of the fuselage. The clamp arm is movable from a disengaged position into an over-center position from which the clamp arm is unable to pivot away from the surface and back toward the disengaged position. The platform is configured to be removably supported on the clamp base of each of the pair of toggle clamps when coupled to the aircraft. The platform is sized to cover a temporary gap between the fuselage and a wing during assembly of the aircraft.

Also disclosed is a method of coupling a platform to a structure. The method includes coupling a clamp base of each of a pair of toggle clamps to one of a pair of mounting points spaced apart from each other on a structure. In addition, the method includes pivoting a clamp arm of each of the toggle clamps about an arm-base pivot point to move the clamp arm from a disengaged position to an over-center position in which the clamp arm is unable to pivot in an opposite direction back toward the disengaged position when a clamp foot on an end of the clamp arm is in contact with a surface of the structure. The method also includes mounting a tool on the pair of toggle clamps.

The features, functions and advantages that have been discussed can be achieved independently in various embodiments of the present disclosure or may be combined in yet other embodiments, further details of which can be seen with reference to the following description and drawings below.

### BRIEF DESCRIPTION OF THE DRAWINGS

These and other features of the present disclosure will become more apparent upon reference to the drawings wherein like numbers refer to like parts throughout and wherein:
Figure 1 is a top view of an aircraft during assembly, and illustrating a structure gap that temporarily exists at a wing-fuselage joint on each side of the aircraft;
Figure 2 is a perspective view of the wing-fuselage joint on one side of the aircraft of Figure 1 and illustrating a removable platform installed in the structure gap via a pair of toggle clamps (not shown) removably coupled to the fuselage;
Figure 3 is a magnified view of an example of the platform of Figure 2 installed in the structure gap and supported from underneath by a pair of toggle clamps;
Figure 4 is an end view of the presently disclosed toggle clamp tool system comprising a pair of toggle clamps removably coupled to the fuselage and supporting a tool in the form of a platform mounted on top of the toggle clamps;
Figure 5 is a bottom-up inboard-looking perspective view of the toggle clamp tool system coupled to the fuselage;
Figure 6 is a top-down outboard-looking perspective view of the toggle clamp tool system of Figure 5;
Figure 7 shows an example of one of the toggle clamps coupled to the fuselage via a clamp attach fitting that is pinned to a mounting bracket protruding from the fuselage, and a clamp shoe bearing against the surface of the fuselage;
Figure 8 is a perspective view of an example of the toggle clamp;
Figure 9 is another perspective view of the toggle clamp of Figure 8;
Figure 10 is a side view of an example of a toggle clamp in the disengaged position in which the clamp arm is pivoted away from the surface of the fuselage;
Figure 11 is a side view of the toggle clamp of Figure 10 in the over-center position in which the clamp arm bears against the surface of the fuselage;
Figure 12 is a side view of the toggle clamp tool system showing the installation of a platform onto a toggle clamp that is coupled to the fuselage;
Figure 13 is a bottom-up perspective view showing the installation of the platform on a pair of toggle clamps attached to the fuselage;
Figure 14 is a top-down perspective view of an example of a platform assembly having an extender plate mounted to the platform and shown in an extended position for extending the effective length of the platform, and further illustrating an access plate for covering a platform opening formed in the platform;
Figure 15 is a perspective view of the platform assembly of Figure 14 showing the extender plate in a retracted position and the access plate installed in the platform opening;
Figure 16 is a view of the underside of the platform assembly of Figures 14-15 and illustrating a pair of plate bosses respectively engaged to a pair of slots formed in the platform for retaining the extender plate to the platform, and further illustrating a roller integrated into the platform to facilitate slidable movement of the extender plate;
Figure 17 is a further example of a platform assembly having an extender plate, which is shown in the extended position, and further illustrating an access plate for covering the platform opening formed;
Figure 18 shows the platform assembly of Figure 17 with the extender plate in the retracted position and the access plate installed in the platform opening;
Figure 19 is a view of the underside of the platform assembly of Figures 17-18 showing plate bosses engaged to slots in the platform for retaining the extender plate to the platform, and further illustrating a roller in the platform to facilitate slidable movement of the extender plate;
Figure 20 is a side view of an example of the toggle clamp tool system during installation of the platform of Figures 17-19 onto a toggle clamp via engagement of a pair of foot notches respectively with a pair of assembly pins installed in the toggle clamp;
Figure 21 is a side view of the toggle clamp tool system of Figure 20 showing the platform secured to the toggle clamp via a removable pin (e.g., a ball-lock pin);
Figure 22 is a top-down perspective view of a toggle clamp tool system showing an example of a platform assembly in which the platform has platform sidewalls for collecting and containing debris generated during manufacturing operations, and further showing a removable debris tray for removing debris collected by the platform;
Figure 23 is a perspective view of the toggle clamp tool system of Figure 22 showing the debris tray removed from a platform opening in the platform;
Figure 24 is a perspective view of an example of the toggle clamp tool system of Figures 22-23, and illustrating the installation of a cover plate and an auxiliary plate onto one end of the platform for increasing its effective length;
Figure 25 shows the toggle clamp tool system of Figure 24 with the cover plate and auxiliary plate installed on the end of the platform;
Figure 26 is a magnified view of the platform assembly of Figures 24-25 showing the cover plate secured to the platform via a removable pin inserted through a tab in the cover plate and passing through a platform sidewall;
Figure 27 is a side view of the example of the toggle clamp tool system of Figures 22-23 during installation of the platform onto a toggle clamp via engagement of the foot notches onto the assembly pins in the toggle clamp;
Figure 28 is a side view of the toggle clamp tool system of Figure 27 showing the platform secured to the toggle clamp via a removable pin;
Figure 29 is a top-down perspective view of a toggle clamp tool system showing a further example of a platform assembly in which the platform has sidewalls similar to the configuration of the platform assembly of Figures 22-23, and illustrating the debris tray removed from the platform opening;
Figure 30 is a perspective view of an example of the platform assembly of Figure 29 similar to the configuration of the platform assembly of Figures 22-23, and illustrating the installation of a cover plate and an auxiliary plate onto one end of the platform;
Figure 31 shows the toggle clamp tool system of Figure 30 with the cover plate and auxiliary plate installed on the end of the platform;
Figure 32 is a side view of the toggle clamp tool system of Figures 29-31 during installation of the platform onto a toggle clamp;
Figure 33 is a side view of the toggle clamp tool system of Figure 32 showing the platform secured to the toggle clamp via a removable pin;
Figure 34 is a flowchart of operations included in a method of temporarily coupling a tool (e.g., a platform) to a structure.

### DETAILED DESCRIPTION

Disclosed examples or versions will now be described more fully hereinafter with reference to the accompanying drawings, in which some, but not all of the disclosed examples or versions are shown. Indeed, several different examples or versions may be provided, and should not be construed as limited to the examples or versions set forth herein. Rather, these examples or versions are provided so that this disclosure will be thorough and fully convey the scope of the disclosure to those skilled in the art.

This specification includes references to "some examples," "one example," or "an example." Instances of the phrases "some examples," "one example" or "an example" do not necessarily refer to the same example. Particular features, structures, or characteristics may be combined in any suitable manner consistent with this disclosure.

As used herein, "comprising" is an open-ended term, and as used in the claims, this term does not foreclose additional structures or steps.

As used herein, "configured to" means various parts or components may be described or claimed as "configured to" perform a task or tasks. In such contexts, "configured to" is used to connote structure by indicating that the parts or components include structure that performs those task or tasks during operation. As such, the parts or components can be said to be configured to perform the task even when the specified part or component is not currently operational (e.g., is not on).

As used herein, an element or step recited in the singular and preceded by the word "a" or "an" should be understood as not necessarily excluding the plural of the elements or steps.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

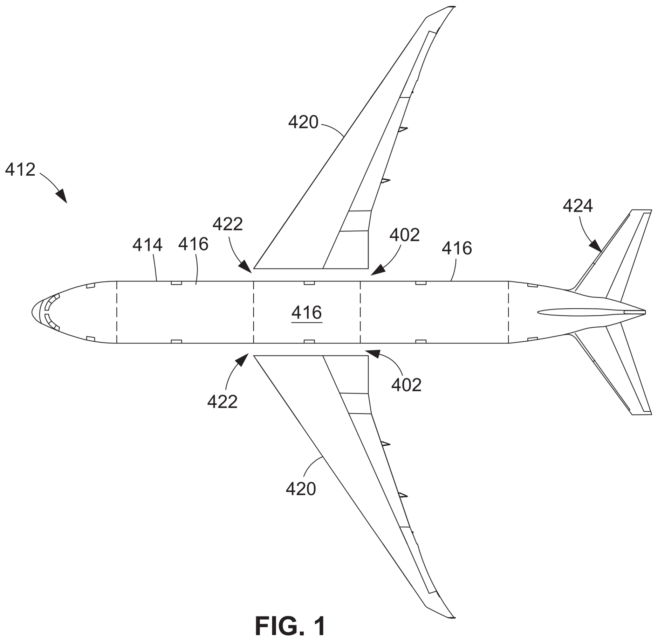

Referring Figure 1, shown is an example of a commercial aircraft 412 during assembly. The aircraft 412 includes wings 420, a fuselage 414, and a tail section 424. The fuselage 414 is made up of barrel sections 416 that are joined end to end. Also shown in Figure 1 is a simplified representation of a structure gap 402 that temporarily exists at the wing-fuselage joint 422 on each side of the aircraft 412 during the assembly process.

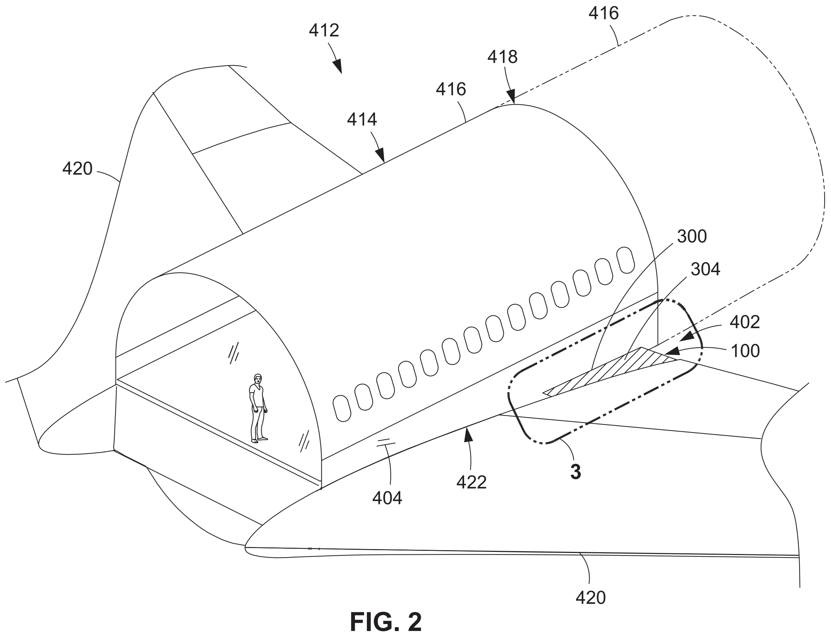

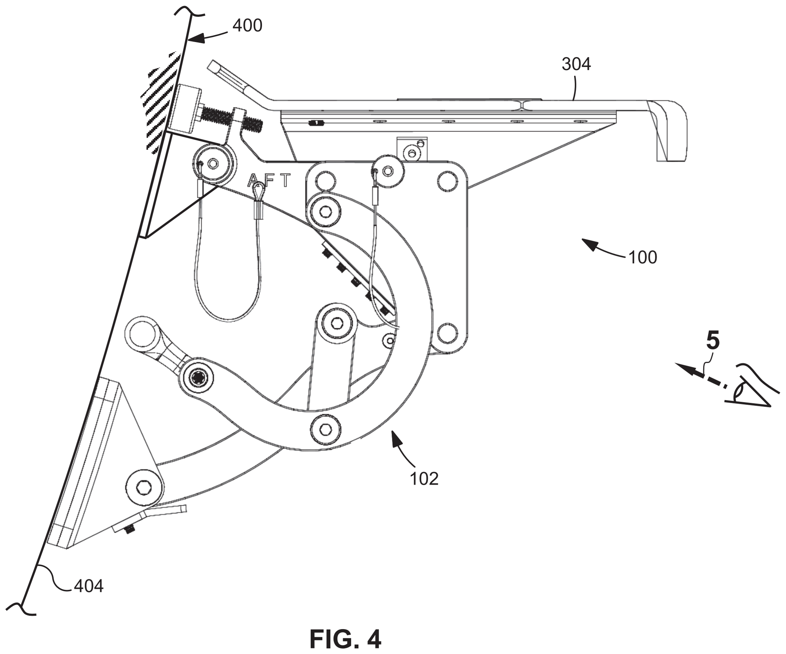

Figure 2 is a magnified view of the wing-fuselage joint 422 on one side of the aircraft 412 showing the structure gap 402 between the wing 420 and the fuselage 414. Also shown is a simplified example of a removable platform 304 installed in the structure gap 402 via a pair of toggle clamps 102 (Figure 4) removably coupled to the fuselage 414. The platform 304 is one of a variety of different types of tools 300 that can be supported on the pair of toggle clamps 102. The tool 300 (e.g., platform 304) and the pair of toggle clamps 102 make up a toggle clamp tool system 100 as shown and described herein.

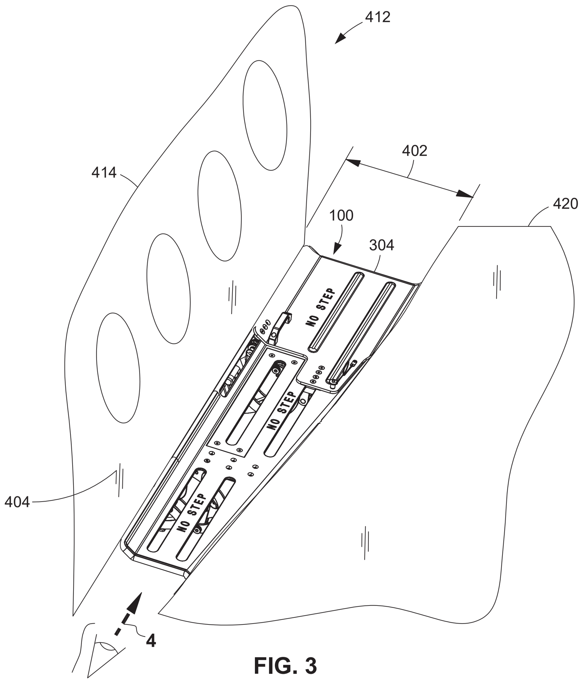

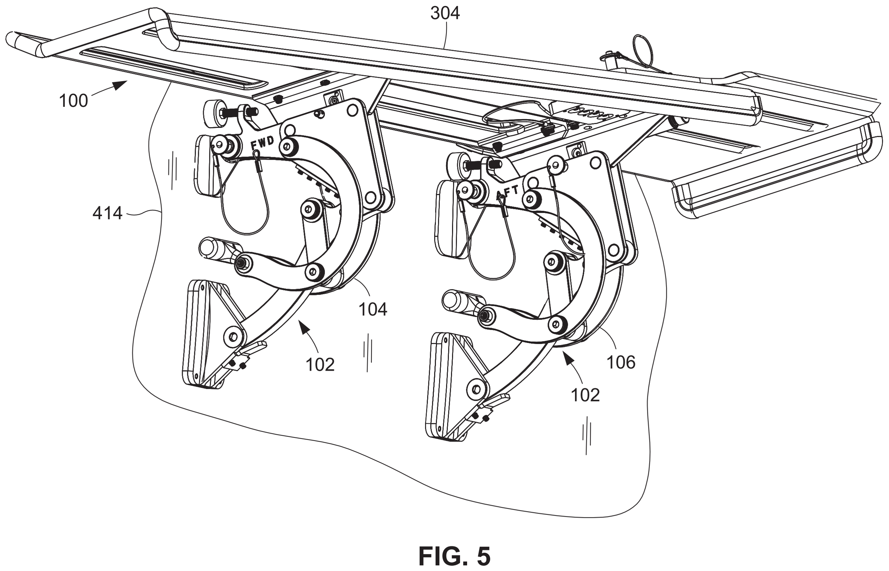

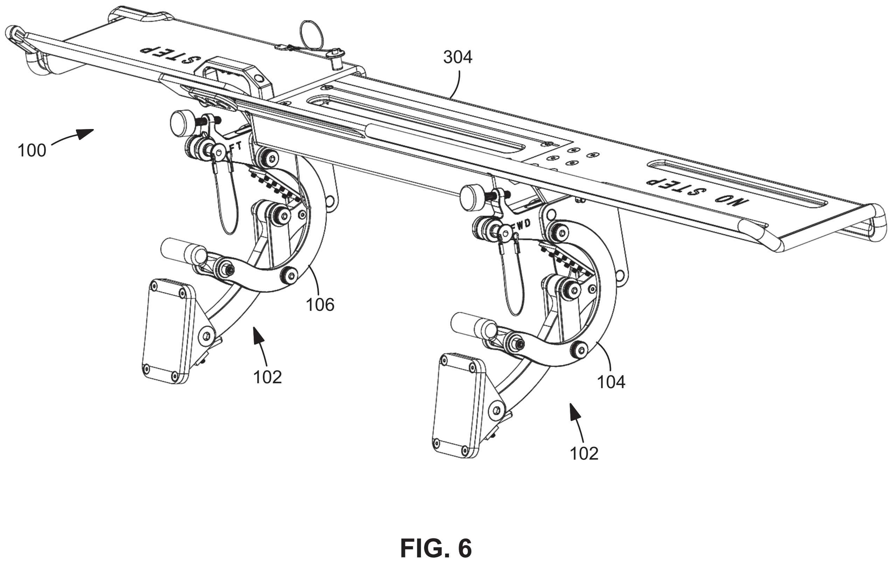

Figures 3-7 show examples of the toggle clamp tool system 100 for installation on an aircraft 412. Figure 3 shows the platform 304 covering at least a portion of the structure gap 402 between the wing 420 and the side of the fuselage 414. Figure 4 is an end view of the toggle clamp tool system 100 showing the platform 304 supported from underneath by the toggle clamps 102. Figures 5-6 are perspective views of the toggle clamp tool system 100 showing the pair of toggle clamps 102 (e.g., a forward toggle clamp 104 and an aft toggle clamp 106) removably coupled to the fuselage 414, and the platform 304 mounted on top of the toggle clamps 102.

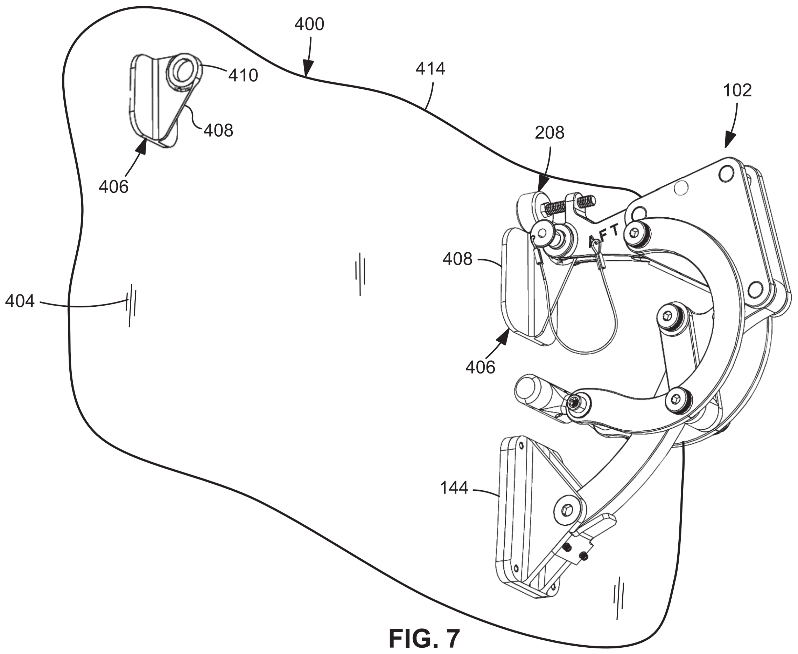

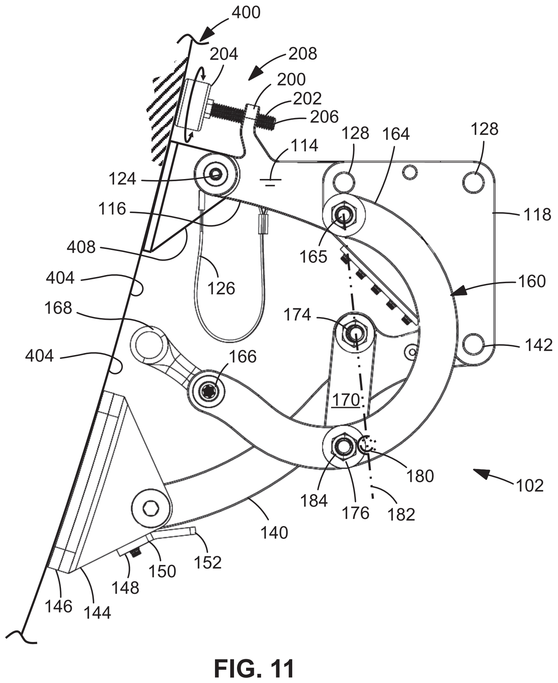

Figure 7 shows one of the toggle clamps 102 coupled to the fuselage 414. The toggle clamp 102 is pinned to a mounting point 406 (i.e., a hardpoint) of the structure 400 which, in the example shown, is a mounting bracket 408 protruding from the fuselage 414. In addition, the toggle clamp 102 includes a clamp foot 144 that bears against the surface 404 of the fuselage 414. In the example shown, the toggle clamp 102 includes a compression device 208 for maintaining clamping pressure of the clamp foot 144 against the surface 404 when the toggle clamp 102 is in an over-center position 184 (Figure 11), as described below.

In the example of Figures 3-7, the platform 304 provides portable fall protection for technicians performing manufacturing operations during assembly of the aircraft 412 at the wing-fuselage joint 422 (Figure 2). For example, the platform 304 provides fall protection during the wing-to-fuselage joining process, and during the process of joining one barrel section to an adjacent barrel section at a section join 418 near the wing-fuselage joint 422 as shown in Figure 2. In addition to fall protection, some examples of the platform 304 are configured to collect foreign object debris (FOD) generated during manufacturing operations, such as drill shavings and fastener components (e.g., individual nuts, bolts, washers, etc.) generated during the process of joining barrel sections 416, and which must be collected and contained to prevent the FOD from contaminating the aircraft 412.

As described in greater detail below, the toggle clamp tool system 100 is configured to be temporarily attached to a structure 400. For example, the toggle clamp tool system 100 can be mounted on a generally vertically oriented surface 404 of a structure 400, such as the side of an aircraft 412 fuselage 414. However, the toggle clamp tool system 100 is not limited to vertically oriented surfaces, and can be installed on surfaces of any orientation. Furthermore, the toggle clamp tool system 100 is not limited to installation on an aircraft 412, and can be installed on any one of a variety of different types of structures 400, including any type of vehicular structure and any type of non-vehicular structure.

Although the tool 300 of the presently disclosed toggle clamp tool system 100 is described in the context of a platform 304 for fall protection, the toggle clamp tool system 100 can alternatively or additionally be used for supporting any one of a variety of different types of tools for performing any one of a variety of different types of tasks. For example, the tool 300 can be a working beam or a plank (not shown) mounted on the toggle clamps 102 and configured to support the weight of one or more technicians. Alternatively or additionally, the tool 300 can be a toolbox (not shown), a catch basin (not shown), a welding machine (not shown), or any one of a variety of different types of fabrication equipment. The toggle clamps 102 are configured to support the weight of the tool 300 and the weight of any objects and/or people on the tool 300. In this regard, the weight limit of the toggle clamp tool system 100 is dictated in part by the load capacity of the hardpoints (e.g., the mounting brackets 408) on the structure 400 as well as the strength of the surface 404 in reacting the compressive force applied by the clamp foot 144 and/or compression device 208 against the surface 404.

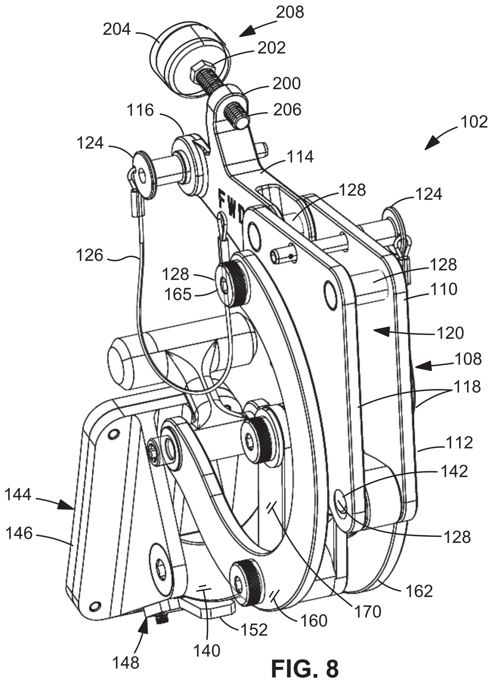

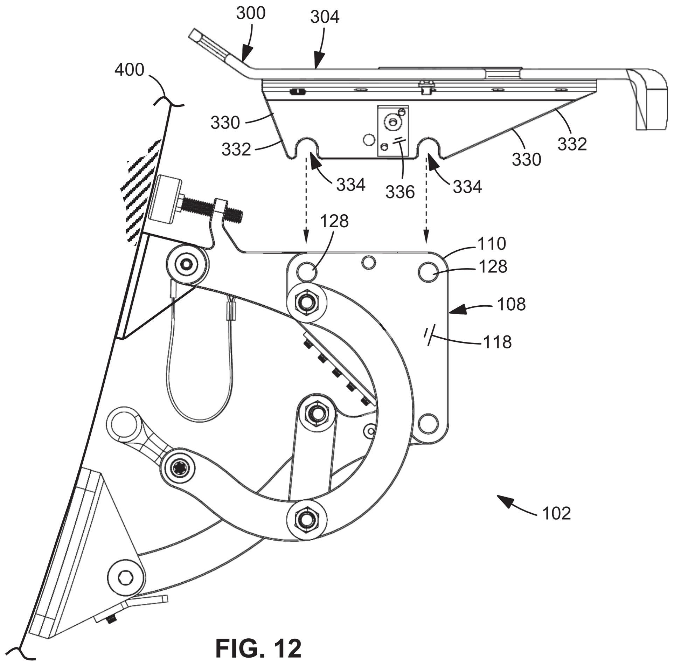

Referring to Figures 8-9, each toggle clamp 102 includes a clamp base 108, a clamp arm 140, a lever 160, and a linkage 170, each of which is formed of a structurally rigid material such as metallic material (e.g., aluminum) or high-strength composite material (e.g., carbon-fiber composite material). The clamp base 108 has a base upper portion 110 and a base lower portion 112, and is made up of a base arm 114 and a pair of base side plates 118 mounted on opposite sides of the base arm 114. The pair of base side plates 118 define a side plate gap 120. The side plate gap 120 is configured to receive a tool foot 330 (Figure 12) of the tool 300 (e.g., platform 304) as described in greater detail below.

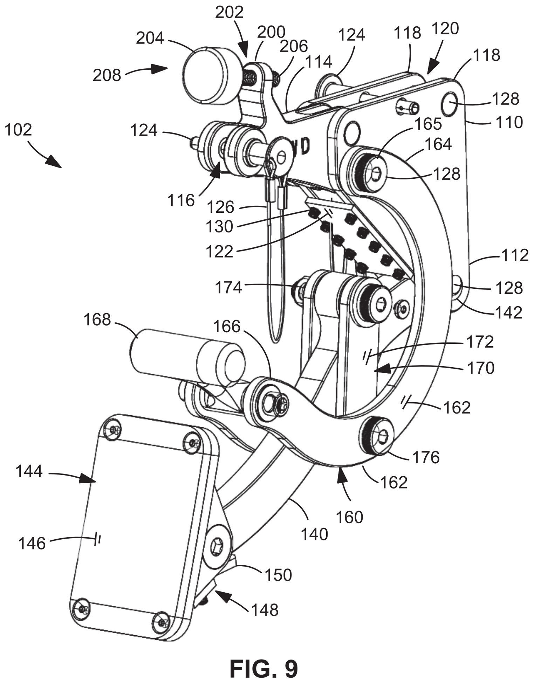

The base arm 114 and the base side plates 118 are fastened together via a pair of assembly pins 128 at the base upper portion 110. An assembly pin 128 is also installed at the location of the lever-base pivot point 165 where the lever 160 is pivotably coupled to the clamp base 108. At the base lower portion 112, the clamp base 108 includes an assembly pin 128 at the location of the arm-base pivot point 142 where the clamp arm 140 is pivotably coupled to the clamp base 108. A shear plate 122 (Figure 9) is fastened to the edges of the base side plate 118 to provide mechanical stability to the clamp base 108.

The base upper portion 110 of the base arm 114 terminates at a clamp attach fitting 116. The clamp attach fitting 116 is configured to be pivotably and removably coupled to a mounting point 406 (e.g., a hardpoint - Figure 7) on the structure 400. In Figure 7, the mounting point 406 is a mounting bracket 408 having a mounting tab 410 protruding from the structure 400.

In the example of Figures 8-11, the clamp attach fitting 116 is a clevis-style fitting configured to be coupled to the mounting tab 410 via a removable pin 124, such as a ball-lock pin. The removable pin 124 is tethered to the clamp base 108 via a tether 126. The pinned connection between the clamp attach fitting 116 and the mounting bracket 408 allows for pivoting of the toggle clamp 102 during installation and removal of the toggle clamp 102 from the structure 400. However, the clamp attach fitting 116 can have any one of a variety of alternative configurations that allows for pivoting motion of the toggle clamp 102, and is not limited to a clevis-style fitting.

Although the clamp base 108 is shown as an assembly of components (e.g., base arm 114, base side plates 118, shear plate 122, etc.) coupled together via assembly pins 128 and mechanical fasteners 130, the clamp base 108 in an alternative configuration (not shown) can be provided as a single unitary part.

In Figures 8-11, the clamp base 108 includes a compression device 208 in the form of a compression arm 200 extending upwardly from the base upper portion 110 near the clamp attach fitting 116. More specifically, the compression arm 200 protrudes from the clamp base 108 on a side of the clamp attach fitting 116 opposite the clamp foot 144. In the example shown, the compression arm 200 is integral with the clamp base 108. Mounted to the compression arm 200 is a compression pad 204, the outer surface of which is preferably formed of a plastic or elastomeric material to prevent damage to the surface 404 of the structure 400. The compression pad 204 is configured to bear against the surface 404 and counteract the compression force applied by the clamp arm 140 against the surface 404 when the toggle clamp 102 is in the over-center position 184 (Figure 11). In this regard, the compression arm 200 mechanically stabilizes the toggle clamp 102 by maintaining clamping pressure (e.g., compressive force) against the surface 404 of the structure 400.

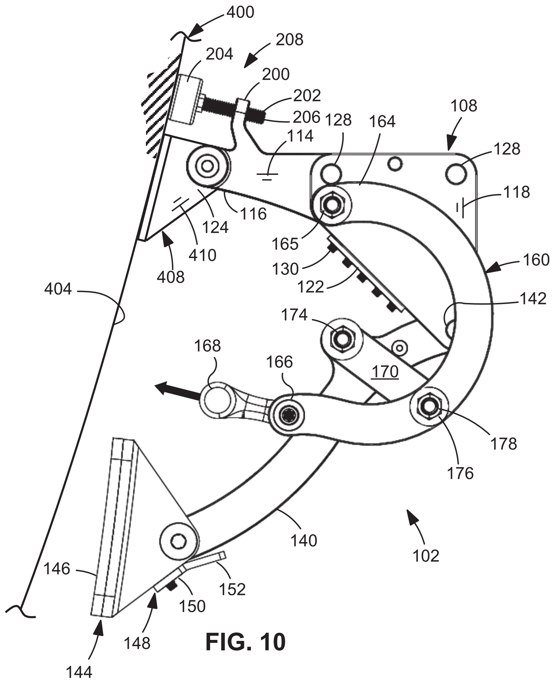

In the example shown, the compression device 208 is a compression adjustment mechanism 202 configured to allow for adjustment of the compression force (i.e., the clamping pressure) of the compression pad 204 (and clamp foot 144) against the surface 404 when the toggle clamp 102 is in the over-center position 184. The compression adjustment mechanism 202 is adjustable in a manner to achieve a compressive force within a desired range (e.g., 5-10 lbs.) at the compression pad 204 prior to mounting a tool 300 (e.g., a platform 304) on the toggle clamp 102. In the example shown, the compression adjustment mechanism 202 comprises the compression pad 204 mounted on a threaded shaft 206, which is threadably engaged to the compression arm 200. During the process of attaching the clamp attach fitting 116 to the mounting bracket 408, the compressive force is iteratively adjusted by manually rotating the compression pad 204 (i.e., and threaded shaft 206) in either direction as the clamp arm 140 is moved from the disengaged position 178 (Figure 10) to the over-center position 184 (Figure 11).

In another example of the toggle clamp 102 not shown, the compression device 208 can be non-adjustable. However, for a non-adjustable compression arm 200, the toggle clamp 102 is preferably configured complementary to the geometry of the structure 400 such that when the clamp arm 140 is in the over-center position 184, the magnitude of compressive force on the compression pad 204 will be within a desired range (e.g., 5-10 lbs. at the compression pad 204).

Referring still to Figures 8-11, the clamp arm 140 is pivotably coupled at one end to the base arm 114 at the arm-base pivot point 142, which is located at the base lower portion 112. The clamp arm 140 is sized to fit between the base side plates 118. The opposite end of the clamp arm 140 has a clamp foot 144 for bearing against the surface 404 of the structure 400. The clamp foot 144 is pivotably coupled to the end of the clamp arm 140, and optionally includes a replaceable clamp shoe 146 formed of plastic or elastomeric material to act as a cushion against the surface 404 to prevent damage to the structure 400.

In the example shown, the toggle clamp 102 has an anti-rotation mechanism 148 in the form of an anti-rotation plate 150. The anti-rotation plate 150 is mounted to the clamp arm 140 and has an outwardly angled anti-rotation tab 152 configured to bear against the clamp arm 140 and limit rotation of the clamp foot 144 relative to the clamp arm 140. The anti-rotation tab 152 maintains the clamp foot 144 at an orientation generally facing toward the surface 404, which facilitates the mounting of the toggle clamp 102 to the structure 400.

Referring still to Figures 8-11, the clamp arm 140 is pivotable about the arm-base pivot point 142 and is moveable between the disengaged position 178 to the over-center position 184 (i.e., an engaged position). Figure 10 shows an example of the toggle clamp 102 in the disengaged position 178 in which the clamp foot 144 is separated from the surface 404 of the structure 400. Figure 11 shows the toggle clamp 102 in the over-center position 184 in which the clamp foot 144 bears against the surface 404 of the structure 400, as does the compression pad 204.

The toggle clamp 102 includes a lever 160 having a lever pivot end 164 and a lever handle end 166. In the example shown, the lever 160 is comprised of a pair of lever plates 162 located respectively on opposites sides of the base side plates 118 and opposite sides of the linkage plates 172. The lever pivot end 164 is pivotably coupled to the clamp base 108 at a lever-base pivot point 165. The lever 160 has a lever handle 168 which is pivotably coupled to the lever handle end 166.

The toggle clamp 102 also includes a linkage 170 pivotably coupled at one end to the clamp arm 140 at a linkage-arm pivot point 174 located between the arm-base pivot point 142 and the clamp foot 144, and pivotably coupled at an opposite end to the lever 160 at a linkage-lever pivot point 176 located between the lever-base pivot point 165 and the lever handle 168. In the example shown, the linkage 170 is comprised of a pair of linkage plates 172 located respectively on opposites sides of the clamp arm 140 and between the pair of lever plates 162.

The clamp arm 140 is movable from the disengaged position 178 (Figure 10) to the over-center position 184 (Figure 11) by pulling the lever handle 168 until the linkage-lever pivot point 176 moves slightly past a dead center position 180 (Figure 12). In the dead center position 180, the lever-base pivot point 165, linkage-arm pivot point 174, and linkage-lever pivot point 176 are aligned with each other (i.e., in straight-line alignment 182). The lever handle 168 is movable via a technician reaching down from above the toggle clamp 102, grasping the lever handle 168, and pulling the lever handle 168 in a direction toward the surface 404 to move the linkage-lever pivot point 176 from the disengaged position 178 to the over-center position 184.

When the toggle clamp 102 is in the over-center position 184 and the clamp foot 144 and the compression device 208 are clamped against the surface 404, the clamp arm 140 is unable to pivot away from the surface 404. In this position, the clamp foot 144 is locked against the surface 404, preventing unintended disengagement of the clamp foot 144 without first pivoting the lever 160 in a manner to move the linkage-lever pivot point 176 from the over-center position 184, past the dead center position 180, and into the disengaged position 178. The lever 160 can be moved via a technician reaching down from above the toggle clamp 102, grasping the lever handle 168, and pushing the lever 160 in a direction away from the surface 404.

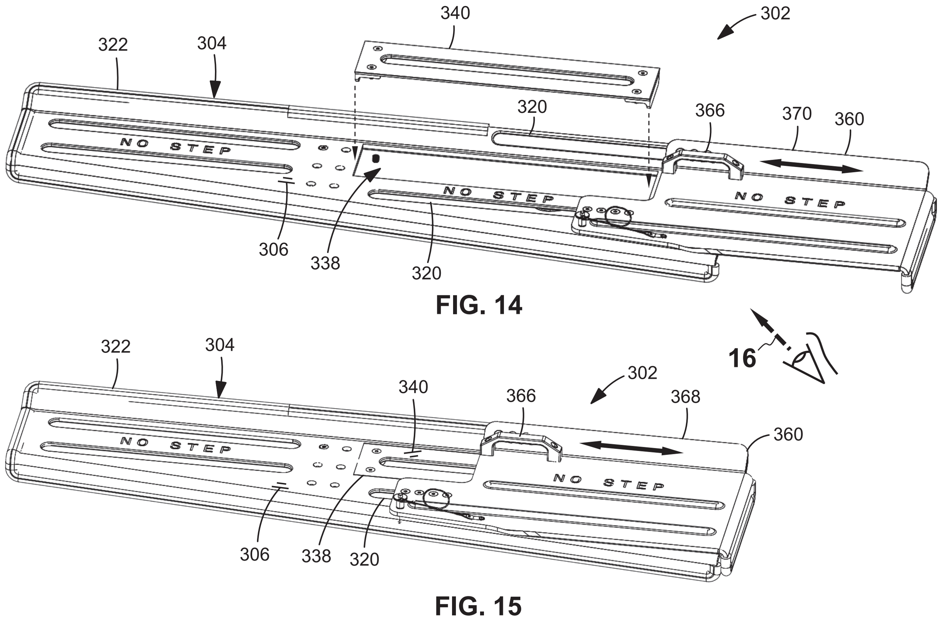

Notably, the lever 160 of the toggle clamp 102 has a U-shaped configuration that crosses over the clamp arm 140 in a manner positioning the lever handle 168 on the same side of the clamp arm 140 as the clamp attach fitting 116. The U-shaped configuration of the lever 160 results in the lever handle 168 being located between the clamp attach fitting 116 and the clamp foot 144, allowing the lever handle 168 to be accessed from a top-down direction by a technician reaching down through a platform opening 338 (Figure 14) in the platform 304. In this manner, a technician located above the toggle clamp 102 can grasp the lever handle 168 and push and pull the lever 160 respectively away from and toward the surface 404 for moving the clamp between the over-center position 184 and the disengaged position 178.

In the present disclosure, any reference to the toggle clamp 102, clamp arm 140, or other clamp component being in the over-center position 184 means that the linkage-lever pivot point 176 has moved from the disengaged position 178 (e.g., Figure 10) to a location slightly past the dead center position 180 (Figure 11). As mentioned above, the dead center position 180 is the position in which the lever-base pivot point 165, the linkage-arm pivot point 174, and the linkage-lever pivot point 176 are aligned with each other. In some examples when the toggle clamp 102 is in the over-center position 184, the clamp foot 144 can be maintained in contact with the surface 404 of the structure 400 due solely to the weight of the toggle clamp 102 and any tool 300 it supports, and without the counterbalancing force (e.g., compressive force) of the compression device 208 against the surface 404.

Referring to Figures 12-13, shown in an example of a platform 304 being mounted on a pair of toggle clamps 102 that are clamped to the structure 400. As mentioned above and shown in Figure 8, the clamp base 108 of each toggle clamp 102 includes one or more assembly pins 128 extending through the base upper portion 110 of the clamp base 108. The assembly pins 128 extend across the side plate gap 120 (Figures 8-9) between the base side plates 118. Each assembly pin 128 may be covered by a sleeve or bushing (not shown).

As shown in Figures 12-13, the tool 300 (e.g., the platform 304) has a pair of vertically oriented tool feet 330 (e.g., platform feet 332) protruding down from the underside of the tool 300. Each tool foot 330 has a thickness that is sized to fit within the side plate gap 120. In addition, the bottom edge of each tool foot 330 contains a pair of foot notches 334 configured to be respectively mounted on the pair assembly pins 128 in the clamp base 108 to support the tool 300 (e.g., platform 304) on the toggle clamp 102.

Each of the tool feet 330 (e.g., platform feet 332) optionally has a pair of tapered wedges 336 mounted on opposing sides of the tool foot 330 for the purpose of reducing any gap between each side of the tool foot 330 and the base side plates 118. The tapered wedges 336 on each tool foot 330 may reduce or prevent side-to-side movement of each tool foot 330 within the side plate gap 120. Although the platform 304 may be maintained in position on the toggle clamps 102 via gravity, in the example of Figures 4-6, the platform 304 is positively locked to the toggle clamps 102 via a removable pin 124 (e.g., a ball-lock pin) inserted through holes formed in each tool foot 330 and the base side plates 118 of each toggle clamp 102, as shown in Figures 4-5 and 7-9. Each removable pin 124 is tethered to the toggle clamp 102 via a tether 126.

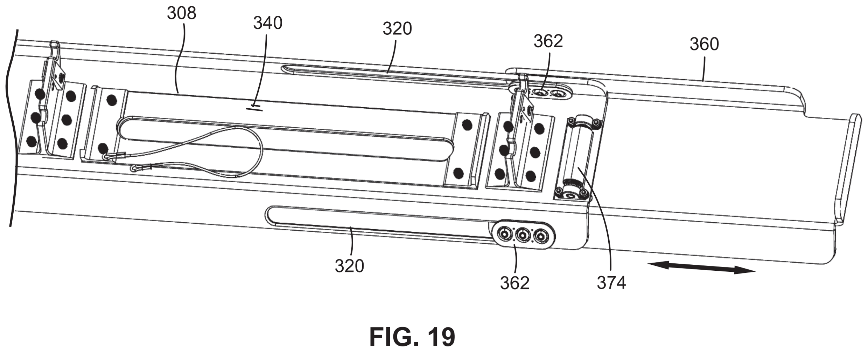

Referring to Figures 14-33, shown are several different configurations of platform assemblies 302, each of which can be mounted on a pair of toggle clamps 102 in the manner shown in Figures 12-13. Each of the platform assemblies 302 includes a platform base 306, and each platform assembly 302 is modular in the sense that various components can be removed, replaced, and/or added to the platform base 306 to change the overall configuration of the platform assembly 302. In the present disclosure, the terms "platform" and "platform assembly" are used interchangeably.

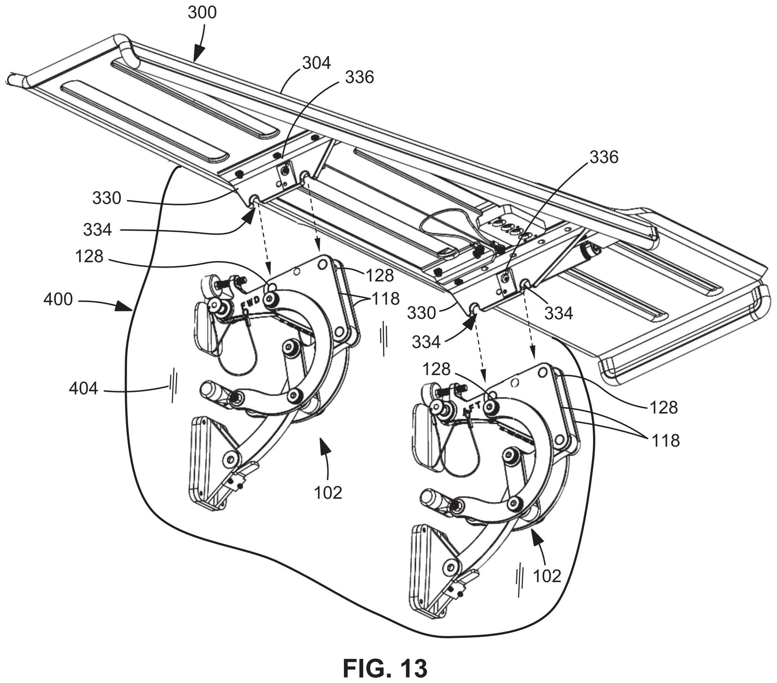

Referring to Figures 14-15, shown is an example of a platform assembly 302 in which the platform base 306 comprises a plate having an upwardly angled inboard edge (e.g., at an approximate 45 degree angle) and a vertically downward outboard edge as shown in Figure 13. The platform 304 is partially surrounded by a platform bumper 322 that is preferably formed of a cushioning material such as elastomeric material (e.g., rubber, foam, etc.). The platform bumper 322 extends along at least a portion of the perimeter edges of the platform 304 to prevent damage to the structure 400 during the installation, use, and removal of the platform assembly 302 from the toggle clamps 102.

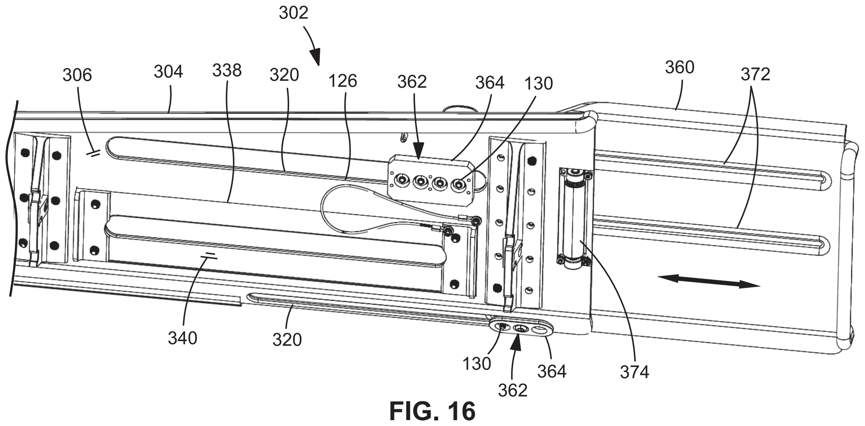

Figure 14 shows a platform opening 338 formed in the platform base 306 to provide access to the area underneath the platform 304. For example, a technician can reach down through the platform opening 338 and install or remove the removable pins 124 (e.g., ball-lock pins) that are inserted through the tool feet 330 and toggle clamps 102 to positively lock the platform 304 to the toggle clamps 102, as shown in Figures 4-5 and 7-9 and described above. Figure 15 shows the platform opening 338 covered by a manually removable access plate 340, which is held in place by the force of gravity. As shown in Figure 16, the access plate 340 can be tethered to the platform base 306 via a tether 126.

Referring to Figures 14-16, the platform assembly 302 includes a slidable extender plate 360 configured to slide in a lengthwise direction of the platform 304 in a manner increasing the effective length of the platform 304. Figure 14 shows the extender plate 360 in an extended position 370, and Figure 15 shows the extender plate 360 in a retracted position 368. The extender plate 360 is secured to the platform 304 via one or more plate bosses 362 engaged to lengthwise platform slots 320 formed in the platform base 306. In the example of Figures 14-16, the extender plate 360 is engaged to two platform slots 320 formed in the platform base 306.

As shown in Figure 16, each of the plate bosses 362 has a flared portion 364 located on one side of the platform base 306. The extender plate 360 is located on a side of the platform base 306 opposite the flare portion 364. Each plate boss 362 has a width that is complementary to the width of the platform slot 320 into which it is inserted. The plate boss 362 is secured to the extender plate 360 via mechanical fasteners 130.

Each extender plate 360 has an extender plate handle 366 for manually sliding the extender plate 360 to the desired location for increasing the length of the platform 304. The underside of the platform 304 includes a roller 374 to facilitate slidable movement of the extender plate 360. Toward this end, the extender plate 360 include one or more lengthwise ribs 372 that protrude from the bottom of the extender plate 360 and which rest on the roller 374.

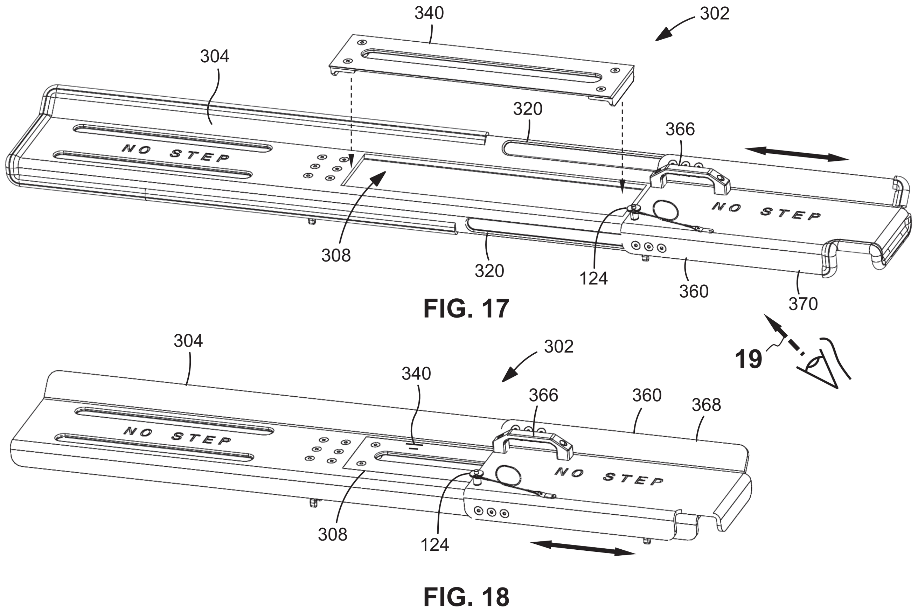

Referring to Figures 17-19, shown is a narrower version of the platform assembly 302 of Figures 14-16. The platform 304 has a platform opening 338 to provide access to the area underneath the platform 304 for inserting removable pins 124 (e.g., ball-lock pins) for locking the platform assembly 302 to the toggle clamps 102. The platform opening 338 is covered by a removable access plate 340 as described above. In addition, the platform assembly 302 of Figures 17-19 includes a slidable extender plate 360 for increasing the effective length of the platform. The extender plate 360 can be locked in the extended position 370 by inserting a removable pin 124 through holes formed in the extender plate 360 and the platform 304, similar to the arrangement shown in Figures 14-15.

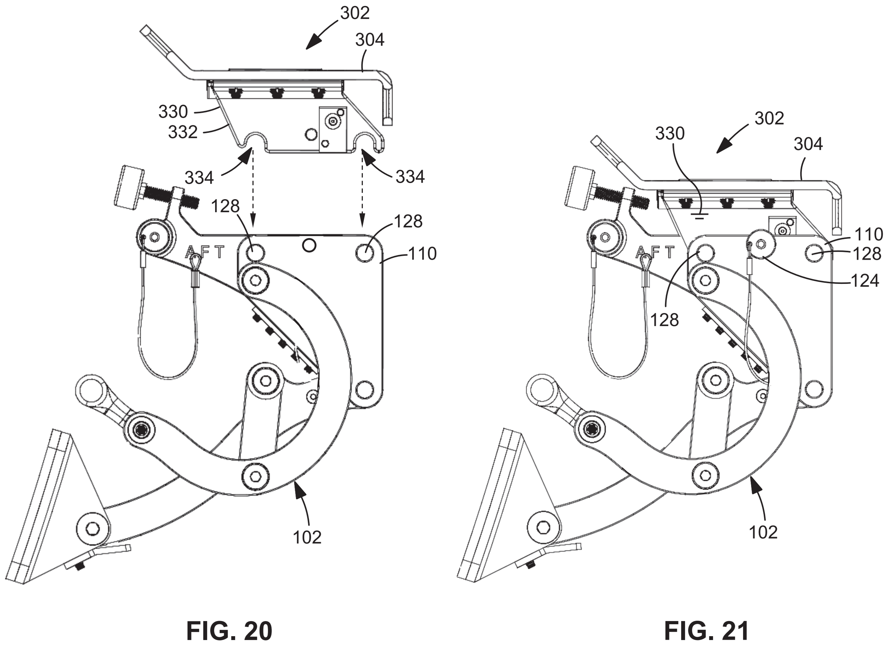

Figure 20-21 are side views of the installation of the platform assembly 302 of Figures 17-19 onto the toggle clamps 102. As described above, the tool feet 330 (e.g., platform feet 332) of the platform 304 contain a pair of foot notches 334 configured to engage with a pair of assembly pins 128 in the base upper portion 110 of the toggle clamp 102. Shown in Figure 21 is a removable pin 124 (e.g., ball-lock pin) inserted through holes in the toggle clamp 102 and tool feet 330 to positively lock the platform 304 to the toggle clamp 102.

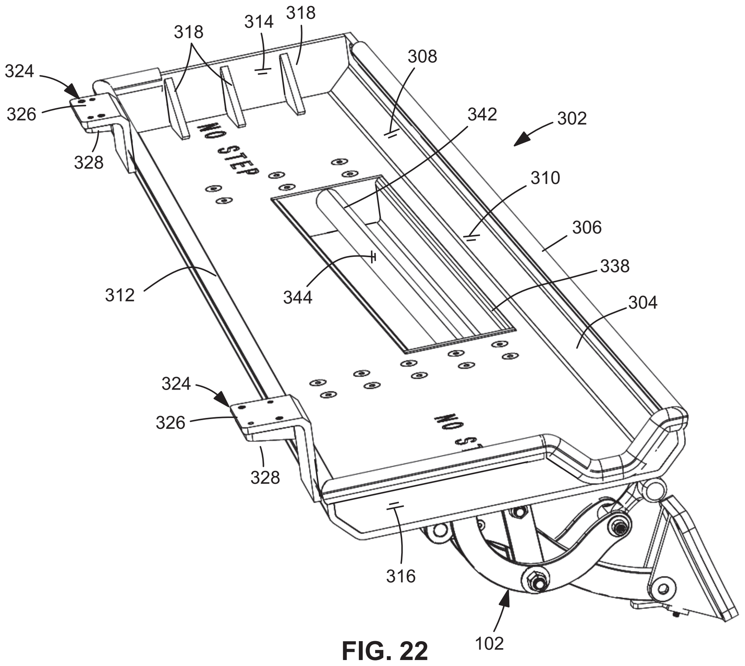

Referring to Figures 22-33, shown are examples of a platform assembly 302 having sidewalls. Whereas the platform assemblies 302 of Figures 13-21 are configured primarily for the purpose of covering a structure gap 402 to provide fall protection for technicians, the platform assemblies 302 of Figures 22-33 have the additional ability to collect and contain foreign object debris (FOD) generated during manufacturing operations. For example, the platform assemblies 302 of Figures 22-33 provide the ability to collect and contain drill shavings and fastener components (e.g., nuts, bolts, washers, etc.) generated when drilling holes and installing fasteners.

In Figures 22-23 the platform assembly 302 is formed as a weldment comprising a platform base 306 and platform sidewalls 308 extending upwardly from the platform base 306. In the example shown, the platform assembly 302 has an inboard sidewall 310, an outboard sidewall 312, a forward sidewall 314, and an aft sidewall 316. The platform sidewalls 308 provide a means for containing FOD that falls on the platform 304 during use, thereby preventing the FOD from falling into and contaminating the structure 400, which is important in critical areas such as the wing-fuselage joint 422 (Figure 2) of an aircraft 412. In Figure 22-23, the forward sidewall 314 and the aft sidewall 316 are joined (e.g., welded) to the platform base 306, and include one or more gussets 318 for reinforcement.

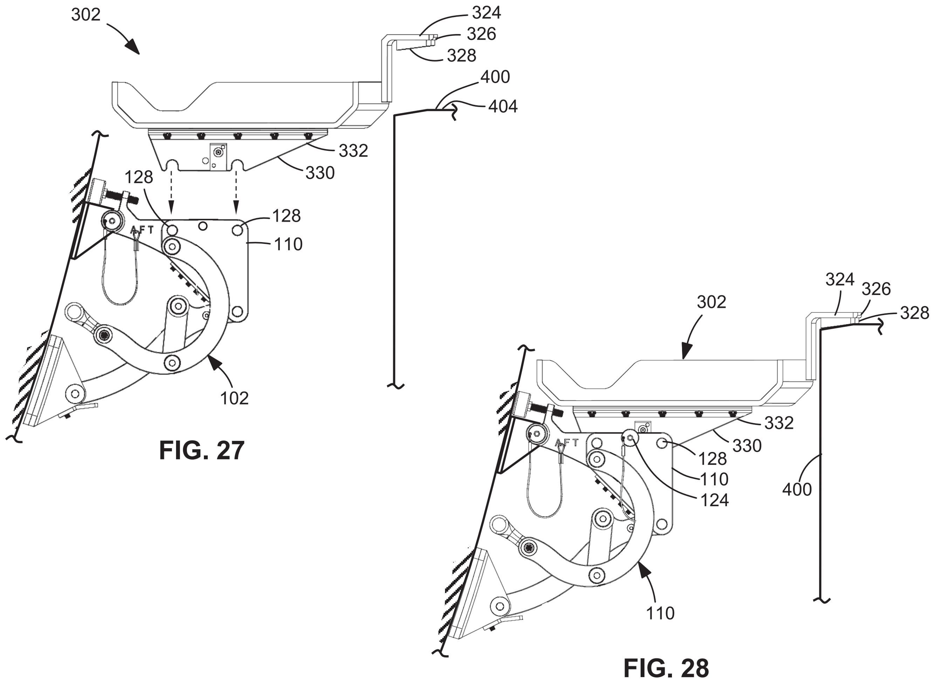

In the example of Figures 22-25, the platform assembly 302 optionally includes secondary support brackets 324 configured to rest against a portion of the structure 400 (Figure 28) to provide backup support for the platform 304 in addition to the toggle clamps 102, which are otherwise configured to carry the entirety of normally anticipated loads on the platform 304. In the example shown, the secondary support brackets 324 each have an L-shaped configuration when viewed from the side, and are coupled (e.g., welded) to the outboard sidewall 312 of the platform. Each secondary support bracket has a horizontal tab 326 containing a tab bumper 328 underneath to rest against the structure 400, as shown in Figures 27-28.

In Figures 22-23, the platform 304 has a removable debris tray 342 for removing debris collected by the platform 304 during manufacturing operations. The platform 304 has a platform opening 338 configured to receive the debris tray 342. The debris tray 342 has a tray handle 344, which is the tubular member extending across the length of the debris tray 342. The platform opening 338 provides a means for accessing the area underneath the platform 304 for inserting the removable pins 124 (e.g., ball-lock pins) that lock the platform 304 to the toggle clamps 102. When the debris tray 342 is installed in the platform opening 338, debris collected by the platform 304 can be manually swept, with a brush or broom, into the debris tray 342, which can then be lifted out of the platform opening 338 and its contents disposed of in a waste container.

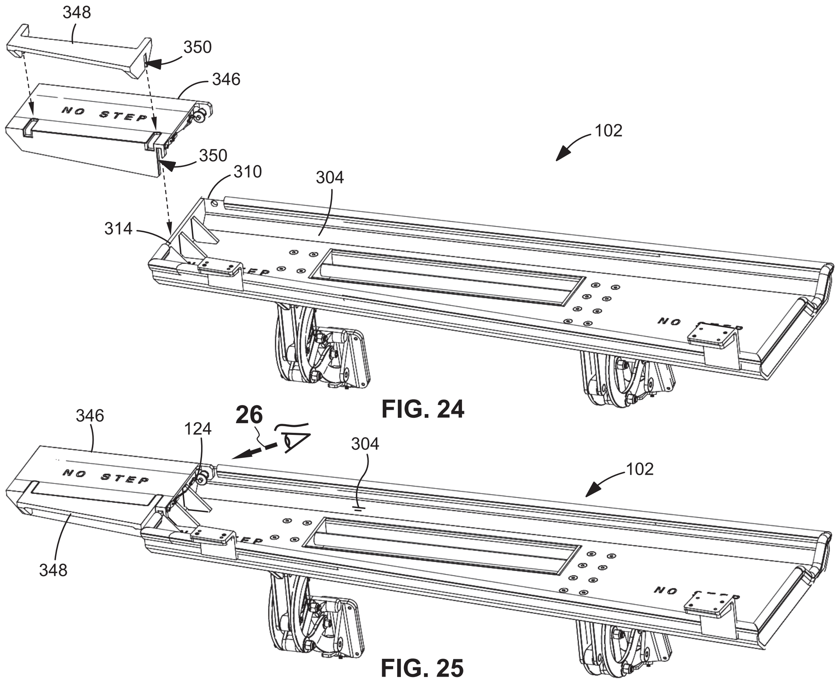

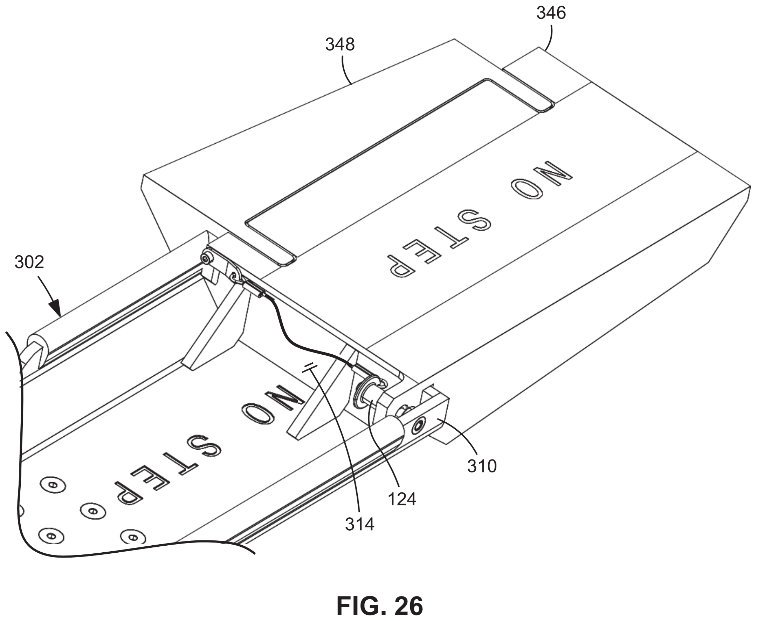

Referring to Figures 24-25, the platform assembly 302 optionally includes a cover plate 346 configured to be removably mounted to an end of the platform 304 to increase the effective length of the platform 304. In this regard, the end of the cover plate 346 has plate notches 350 configured to be inserted over the end sidewall (e.g., the forward sidewall 314 or aft sidewall 316) of the platform. As shown in Figure 26, a removable pin 124 (e.g., ball-lock pin) is inserted into a hole formed in a tab of the cover plate 346 and into a corresponding hole in the inboard sidewall 310 for retaining the cover plate 346 with the platform assembly 302.

The platform assembly 302 can additionally include an auxiliary plate 348 configured to be coupled to the cover plate 346. For example, plate notches 350 in the auxiliary plate 348 are inserted over a vertical flange of the cover plate 346, as shown in Figure 24. The auxiliary plate 348 locally increases the width of the platform assembly 302.

Referring to Figures 27-28, shown are side views of the installation of the platform assembly 302 of Figures 22-26 onto the toggle clamps 102. Similar to the above-described mounting process shown in Figures 20-21, the tool notches 334 in the tool feet 330 (e.g., platform feet 332) in Figures 27-28 are lowered onto the assembly pins 128 in the base upper portion 110 of each toggle clamp 102. As shown in Figure 28, a removable pin 124 (e.g., ball-lock pin) is inserted through holes in the toggle clamp 102 and tool feet 330 to positively lock the platform 304 to the toggle clamp 102. Also shown in Figure 28 is the secondary support bracket 324 configured to rest against a portion of the structure 400 (e.g., aircraft 412 wing 420) to provide backup support for the platform 304 in addition to the support provided by the toggle clamps 102. The secondary support bracket 324 has a horizontal tab 326 containing a tab bumper 328 configured to bear against the structure 400. The tab bumper 328 is preferably formed of a material such as elastomeric material to prevent damage to the surface 404 of the structure 400.

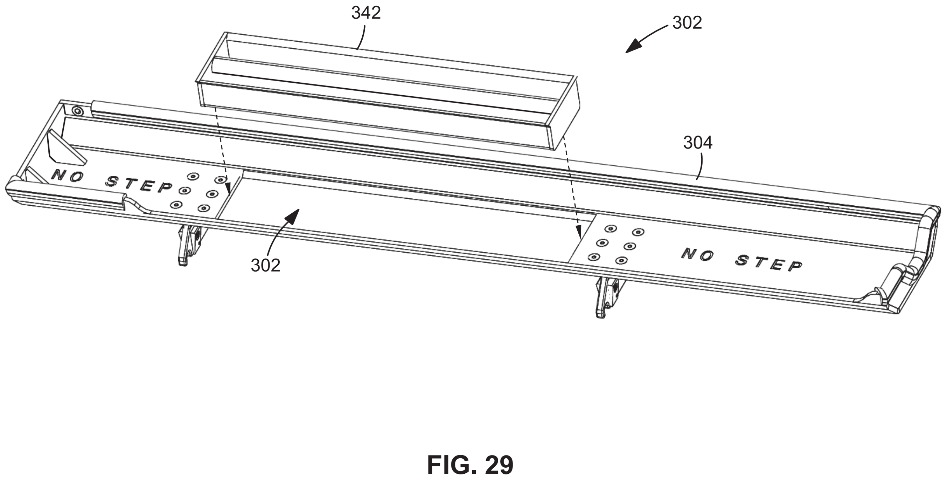

Referring to Figures 29-31, shown is a narrower version of the platform assembly 302 of Figures 22-28. The platform 304 of Figures 29-31 has a platform opening 338 for accessing the area underneath the platform 304 for inserting the removable pins 124 (e.g., ball-lock pins) that lock the platform 304 to the toggle clamps 102. The platform assembly 302 also has a removable debris tray 342 for removing debris collected by the platform, similar to the above-described arrangement of Figures 22-23.

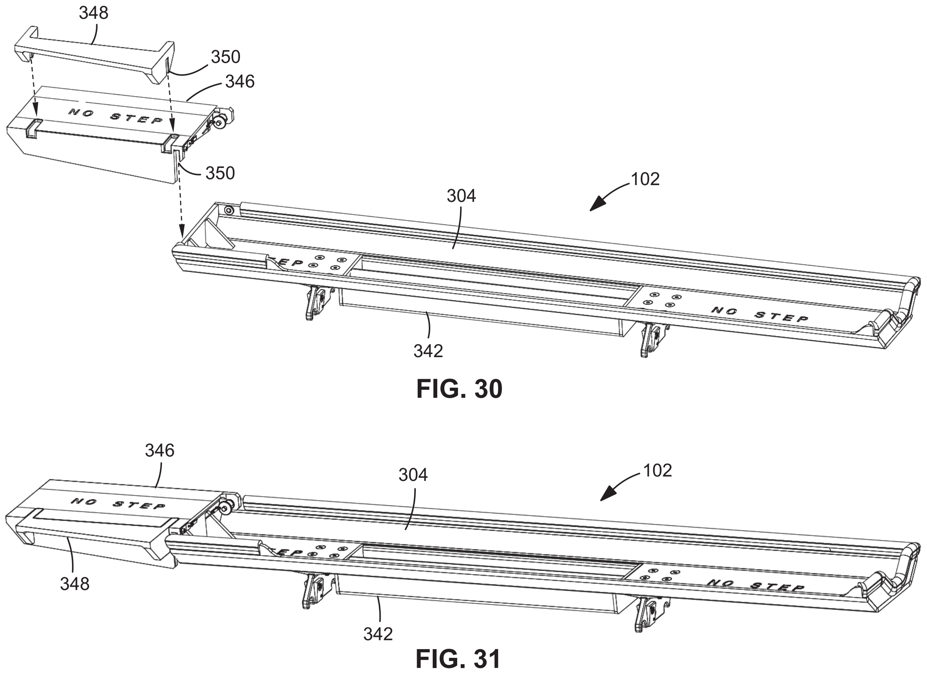

Referring to Figures 30-31, the platform assembly 302 optionally includes a cover plate 346 configured to be removably mounted to the end of the platform 304 as described above for Figures 24-26. Additionally, the platform assembly 302 can include an auxiliary plate 348 configured to be coupled to the cover plate 346 to locally increase the width of the platform assembly 302. The auxiliary plate 348 in Figures 30-31 is similar to the arrangement described above for Figures 24-25 in which the plate notches 350 of the auxiliary plate 348 are inserted over the vertical flange of the cover plate 346.

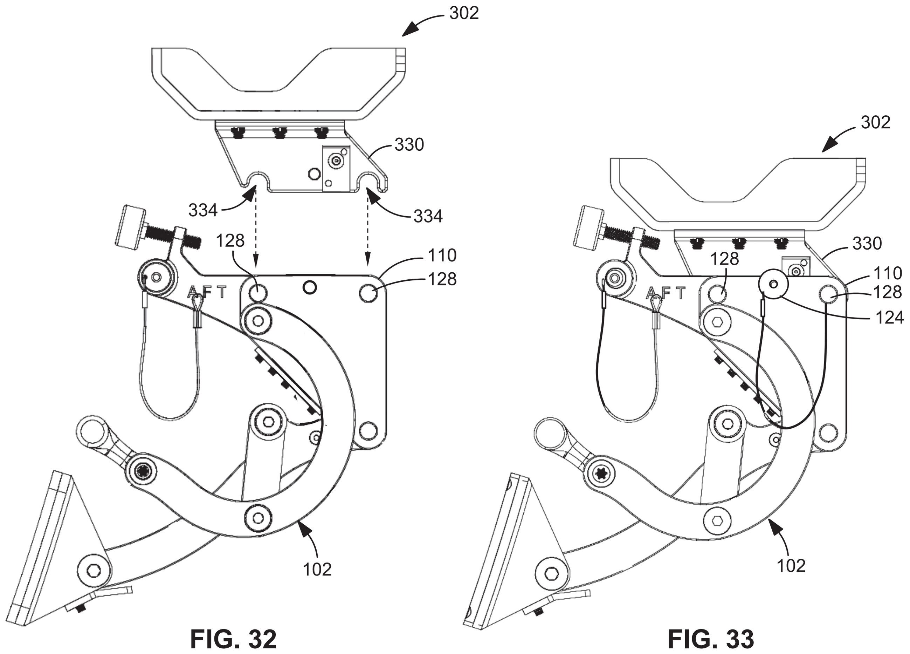

Figure 32-33 are side views showing the mounting of the platform assembly 302 of Figures 29-31 on the toggle clamps 102, and in which the foot notches 334 in the tool feet 330 are mounted on top of the assembly pins 128 in the base upper portion 110 of the toggle clamp 102. A removable pin 124 (e.g., ball-lock pin) is then inserted through holes in the toggle clamp 102 and tool feet 330 to positively lock the platform 304 to the toggle clamp 102, as shown in Figure 33.

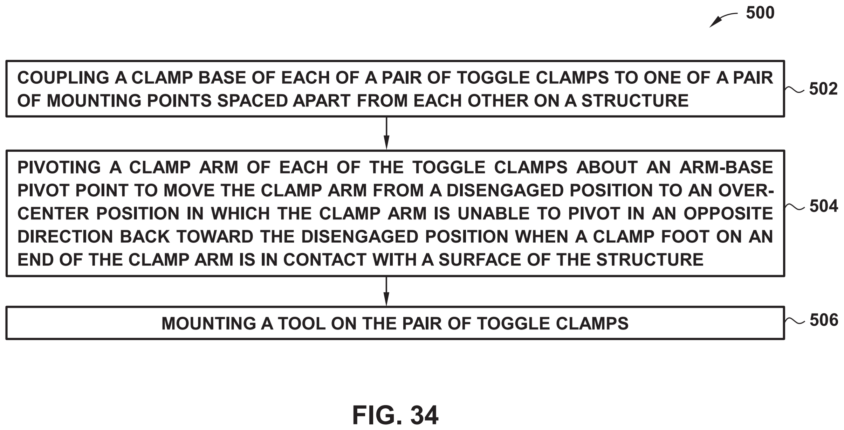

Referring to Figure 34, shown is a method 500 of coupling a tool 300 (e.g., a platform 304) to a structure 400 (e.g., an aircraft 412). Step 502 of the method 500 includes coupling the clamp base 108 of each of a pair of toggle clamps 102 to one of a pair of mounting points 406 spaced apart from each other on a structure 400. As shown in Figure 7 and described above, the mounting points 406 are hardpoints on the structure 400, which may be configured as mounting brackets 408, each having a mounting tab 410 protruding from the structure 400.

In some examples, step 502 of coupling the clamp base 108 of each toggle clamp 102 to a mounting point 406 on the structure 400 comprises installing a removable pin 124 through a clamp attach fitting 116 of the clamp base 108 and into the mounting tab 410. The removable pin 124 can be configured as a ball-lock pin that is tethered to the toggle clamp 102, as shown in Figure 7. The toggle clamp 102 is typically in the disengaged position 178 (Figure 10) prior to pinning (e.g., via the removable pin) the clamp base 108 to the mounting point 406 on the structure 400. As shown in Figure 10 and described above, the clamp foot 144 can include an anti-rotation mechanism 148 to maintain the clamp foot 144 in an orientation that generally faces the surface 404 in preparation for moving the clamp arm 140 from the disengaged position 178 to the over-center position 184.

Step 504 of the method 500 includes pivoting the clamp arm 140 of each toggle clamp 102 about its arm-base pivot point 142 to move the clamp arm 140 from the disengaged position 178 (Figure 10) to the over-center position 184 (Figure 11). More specifically, step 504 of pivoting the clamp arm 140 of each toggle clamp 102 from the disengaged position 178 to the over-center position 184 comprises pulling the lever handle 168 on the end of the lever 160, which is pivotably coupled to the clamp base 108 at the lever-base pivot point 165. As described above, the lever 160 is coupled to the clamp am via the linkage 170, which is coupled at one end to the clamp arm 140 at the linkage-arm pivot point 174 located between the arm-base pivot point 142 and the clamp foot 144, and the opposite end of the linkage 170 is coupled to the lever 160 at the linkage-lever pivot point 176, which is located between the lever-base pivot point 165 and the lever handle 168.

Notably, as shown in Figures 10-11 and described above, the clamp arm 140 is moved from the disengaged position 178 to the over-center position 184 by pulling the lever handle 168 until the linkage-lever pivot point 176 moves slightly past the dead center position 180, which is the position at which the lever-base pivot point 165, linkage-arm pivot point 174, and linkage-lever pivot point 176 are aligned with each other in straight-line alignment 182. When the clamp arm 140 is in the over-center position 184 and under a clamping force (e.g., 5-10 lbs.), any increase in the compressive force of the clamp foot 144 and compression pad 204 against the surface 404 (e.g., due to the weight the platform 304 on the toggle clamp) does not cause the clamp arm 140 to pivot away from the surface 404.

The lever handle 168 is mounted to a U-shaped lever 160 that crosses over the clamp arm 140 in a manner positioning the lever handle 168 on the same side of the clamp arm 140 as the clamp attach fitting 116. This allows the lever handle 168 to be accessed from a top-down direction by a technician reaching down from a location above the toggle clamp 102, and grasping the lever handle 168. From this position, the technician can pull the lever 160 toward the surface 404, which moves the toggle clamp 102 from the disengaged position 178 (Figure 10) to the over-center position 184 (Figure 11).

In some examples, step 504 of pivoting the clamp arm 140 into the over-center position 184 includes adjusting, via the compression adjustment mechanism 202, the clamping pressure on the surface 404 of the structure 400 when moving the toggle clamp 102 into the over-center position 184. As described above and shown in Figure 11, the compression adjustment mechanism 202 has a compression pad 204 fixedly mounted on a threaded shaft 206. The threaded shaft 206 is engaged to a threaded hole in the compression arm 200, which protrudes above the base arm 114. Rotation of the compression pad 204 causes adjustment of the magnitude of the compression force against the surface 404. In one example, the compression pad 204 can be adjusted in an iterative manner while pulling the lever handle 168 to move the clamp into the over-center position 184, until the compression force applied by the compression pad 204 is within a predetermined range (e.g., 5-10 pounds). In this regard, the compression force at the compression pad 204 is preferably high enough such that the toggle clamp 102 is "clamped" against the structure 400, but low enough to prevent damage to the surface 404 of the structure 400 due to excessive compression force.

Referring to Figures 12-13, once both toggle clamps 102 are coupled to the structure 400, the method includes step 506 which comprises mounting a tool 300 (e.g., a platform 304) on the pair of toggle clamps 102. As described above, the tool 300 includes tool feet 330 that protrude downwardly, and which include a pair of foot notches 334 on the bottom edge of the tool feet 330, as shown in Figure. 12. Step 506 of mounting the tool 300 on the toggle clamps 102 comprises engaging the foot notches 334 with the assembly pins 128 located in the base upper portion 110 of each toggle clamp 102 as shown in Figure 8. As described above, each tool foot 330 is sized to fit within the side plate gap 120 between the base side plates 118 that make up the toggle clamp 102. In some examples, each tool foot 330 has a tapered wedge 336 mounted on each of its opposing sides for taking up or reducing any gap between each side of the tool foot 330 and the base side plates 118.

Once the foot notches 334 of each tool foot 330 are resting on the assembly pins 128 of the toggle clamps 102, a removable pin 124 (e.g., a ball-lock pin) is inserted through holes formed in each tool foot 330 and the base side plates 118 of each toggle clamp 102, as shown in Figures 4-5 and 7-9. The removable pins 124 positively lock the tool feet 330 to the toggle clamps 102. As described above and shown in Figures 14, 17, 23, 29, each platform 304 configuration includes a platform opening 338 that provides access to the area underneath the platform. The platform opening 338 enables a technician to reach down through the platform opening 338 and install or remove the removable pins 124 (e.g., ball-lock pins) that positively lock the platform 304 to the toggle clamps 102.

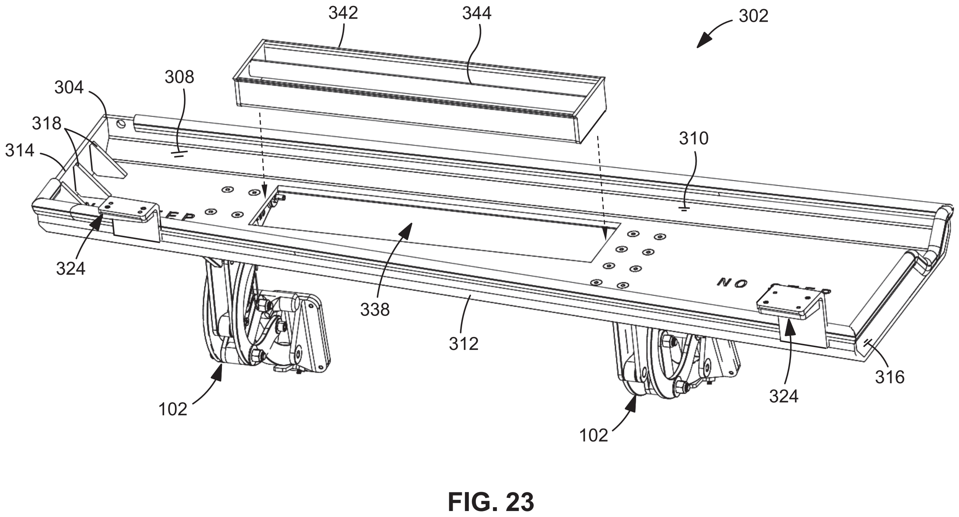

Once the removable pins 124 are installed, the platform opening 338 can be covered by an appropriately configured plate. For example, an access plate 340 (e.g., Figures 14 and 17) or a debris tray 342 (e.g., Figures 23 and 29) can be installed in the platform opening 338. Removal of the tool 300 (e.g., the platform 304) from the structure 400 is performed by reversing the above-described steps.

In some examples, the method 500 includes reconfiguring the platform 304 by replacing and/or adding various components to the basic body of the platform 304 to change its overall configuration. For example, the method can include installing an extender plate 360 on the platform 304 as shown in Figures 14-15 and 17-18. As described above, each extender plate 360 can be secured to lengthwise slots formed in the body of the platform 304. Once installed, the method includes sliding the extender plate 360 in a lengthwise direction in a manner to change the effective length of the platform 304.

In another example of reconfiguring the platform, the method can include inserting either an access plate 340 (Figures 14-15) or a debris tray 342 (Figures 22-23) in the platform opening 338. As mentioned above, with the debris tray 342 installed in the platform opening 338, the method can include using a brush or broom to sweep debris collected by the platform 304 into the debris tray 342, after which the debris tray 342 can be lifted out of the platform opening 338 and its contents disposed of in a waste container.

In a still further example of reconfiguring the platform 304, the method can include removably mounting a cover plate 346 on an end of the platform 304 in a manner to increase the effective length of the platform 304. As shown in Figures 24-26 and 30-31, the method can include engaging the plate notches 350 on the end of the cover plate 346 with the forward sidewall 314 or aft sidewall 316 of the platform 304. A removable pin 124 (e.g., ball-lock pin) can be inserted into a hole formed in the end of the cover plate 346 and into a corresponding hole in the forward sidewall 314 as a means to retain retaining the cover plate 346 with the platform assembly 302. In a similar manner, the local width of the platform 304 can be expanded by coupling an auxiliary plate 348 to the cover plate 346 as shown in Figures 24 and 30. As described above, plate notches 350 in the auxiliary plate 348 are inserted over a vertical flange of the cover plate 346.

The following combinations of features form part of this disclosure.
1. A toggle clamp tool system, comprising:
   a pair of toggle clamps, each comprising:
   a clamp base configured to be pivotably coupled to a mounting point on a structure;
   a clamp arm pivotably coupled at one end to the clamp base at an arm-base pivot point, and having a clamp foot on an opposite end for bearing against a surface of the structure, and the clamp arm is movable from a disengaged position into an over-center position from which the clamp arm is unable to pivot away from the surface and back toward the disengaged position; and
   a tool configured to be removably mounted on the clamp base of each of the toggle clamps when coupled to the structure.
2. The toggle clamp tool system of Clause 1, wherein each toggle clamp includes:
   a lever pivotably coupled at one end to the clamp base at a lever-base pivot point, and having a lever handle on an opposite end of the lever;
   a linkage coupled at one end to the clamp arm at a linkage-arm pivot point located between the arm-base pivot point and the clamp foot, and coupled at an opposite end to the lever at a linkage-lever pivot point located between the lever-base pivot point and the lever handle; and
   wherein the clamp arm is movable from the disengaged position to the over-center position by pulling the lever handle until the linkage-lever pivot point moves past a dead center position in which the lever-base pivot point, linkage-arm pivot point, and linkage-lever pivot point are aligned with each other.
3. The toggle clamp tool system of Clause 2, wherein:
   the clamp base has a clamp attach fitting configured to be removably coupled to the mounting point on the structure; and
   the lever of each toggle clamp has a U-shaped configuration that crosses over the clamp arm in a manner positioning the lever handle on a same side of the clamp arm as the clamp attach fitting.
4. The toggle clamp tool system of Clause 1, wherein:
   at least one of the toggle clamps has a compression adjustment mechanism having a compression pad, and the compression adjustment mechanism is configured for adjusting clamping pressure of the compression pad against the surface when the clamp arm is moved into the over-center position.
5. The toggle clamp tool system of Clause 1, wherein the clamp base comprises:
   a base arm having a base upper portion, and the base upper portion includes a clamp attach fitting configured to be attached to the mounting point on the structure, and the clamp arm is pivotably coupled to the base arm at an arm-base pivot point; and
   a pair of base side plates mounted on opposite sides of the base arm and defining a side plate gap configured to receive the clamp arm at the arm-base pivot point.
6. The toggle clamp tool system of Clause 1, wherein:
   the clamp base includes one or more assembly pins extending through the clamp base; and
   the tool has a pair of tool feet and each tool foot contains one or more notches configured to be respectively received on the one or more assembly pins in the clamp base, to thereby support the tool on the toggle clamps.
7. The toggle clamp tool system of Clause 1, wherein:
   the tool comprises a platform.
8. The toggle clamp tool system of Clause 7, further comprising:
   a debris tray configured to collect debris that falls onto the platform, and the platform has a platform opening configured to receive the debris tray.
9. The toggle clamp tool system of Clause 7, further comprising:
   a cover plate configured to be removably mounted on the platform in a manner increasing an effective length of the platform.
10. The toggle clamp tool system of Clause 7, further comprising:
   an extender plate configured to be installed on the platform and slid in a lengthwise direction in a manner increasing an effective length of the platform.
11. A toggle clamp tool system, comprising:
   a pair of toggle clamps, each comprising:
   a clamp base having a clamp attach fitting configured to be removably coupled to a mounting point on a fuselage of an aircraft;
   a clamp arm pivotably coupled on one end to the clamp base at an arm-base pivot point and having a clamp foot on an opposite end for bearing against a surface of the fuselage, and the clamp arm is movable from a disengaged position into an over-center position from which the clamp arm is unable to pivot away from the surface and back toward the disengaged position; and
   a platform configured to be removably supported on the clamp base of each of the pair of toggle clamps when coupled to the aircraft and the platform is sized to cover a temporary gap between the fuselage and a wing during assembly of the aircraft.
12. A method of coupling a platform to a structure, comprising:
   coupling a clamp base of each of a pair of toggle clamps to one of a pair of mounting points spaced apart from each other on a structure;
   pivoting a clamp arm of each of the toggle clamps about an arm-base pivot point to move the clamp arm from a disengaged position to an over-center position in which the clamp arm is unable to pivot in an opposite direction back toward the disengaged position when a clamp foot on an end of the clamp arm is in contact with a surface of the structure; and
   mounting a tool on the pair of toggle clamps.
13. The method of Clause 12, wherein pivoting the clamp arm of each toggle clamp from the disengaged position to the over-center position comprises:
   pulling a lever handle on an end of a lever pivotably coupled to the clamp base at a lever-base pivot point;
   wherein the lever is coupled to the clamp arm via a linkage coupled at one end to the clamp arm at a linkage-arm pivot point located between the arm-base pivot point and the clamp foot, and coupled at an opposite end to the lever at a linkage-lever pivot point located between the lever-base pivot point and the lever handle; and
   the clamp arm is movable from the disengaged position to the over-center position by pulling the lever handle until the linkage-lever pivot point moves past a dead center position in which the lever-base pivot point, linkage-arm pivot point, and linkage-lever pivot point are aligned with each other.
14. The method of Clause 13, wherein pulling the lever handle comprises:
   pulling the lever handle on the lever, which has a U-shaped configuration that crosses over the clamp arm in a manner positioning the lever handle on a same side of the clamp arm as a clamp attach fitting of the clamp base and which is removably coupled to the mounting point on the structure.
15. The method of Clause 12, further comprising:
   adjusting, via a compression adjustment mechanism, clamping pressure of a compression pad against the surface of the structure when moving the clamp arm into the over-center position.
16. The method of Clause 12, wherein coupling the clamp base of each toggle clamp to one of the mounting points on the structure comprises:
   installing a removable pin through a clamp attach fitting of the clamp base and into a mounting tab protruding from the structure.
17. The method of Clause 12, wherein mounting the tool on the toggle clamps comprises:
   engaging notches in tool feet with assembly pins in the clamp base.
18. The method of Clause 12, further comprising:
   installing a debris tray in a platform opening after mounting the platform on the toggle clamps.
19. The method of Clause 12, further comprising:
   mounting a cover plate to an end of the platform in a manner increasing an effective length of the platform.
20. The method of Clause 12, further comprising:
   installing an extender plate on the platform and sliding the extender plate in a lengthwise direction in a manner increasing an effective length of the platform.

Many modifications and other configurations of the disclosure will come to mind to one skilled in the art, to which this disclosure pertains, having the benefit of the teachings presented in the foregoing descriptions and the associated drawings. The configurations described herein are meant to be illustrative and are not intended to be limiting or exhaustive. Although specific terms are employed herein, they are used in a generic and descriptive sense only and not for purposes of limitation.

## Claims

1. A toggle clamp tool system (100), comprising:
a pair of toggle clamps (102; 104, 106), each comprising:
a clamp base (108) configured to be pivotably coupled to a mounting point (406) on a structure (400);
a clamp arm (140) pivotably coupled at one end to the clamp base (108) at an arm-base pivot point (406), and having a clamp foot (144) on an opposite end for bearing against a surface (404) of the structure (400), and the clamp arm (140) is movable from a disengaged position (178) into an over-center position (368) from which the clamp arm (140) is unable to pivot away from the surface (404) and back toward the disengaged position (178); and
a tool (300) configured to be removably mounted on the clamp base (108) of each of the toggle clamps (102; 104, 106) when coupled to the structure (400).

2. The toggle clamp tool system (100) of Claim 1, wherein each toggle clamp (102; 104, 106) includes:
a lever (160) pivotably coupled at one end to the clamp base (108) at a lever-base pivot point (165), and having a lever handle (168) on an opposite end of the lever (160);
a linkage (170) coupled at one end to the clamp arm (140) at a linkage-arm pivot point (174) located between the arm-base pivot point (406) and the clamp foot (144), and coupled at an opposite end to the lever (160) at a linkage-lever pivot point (176) located between the lever-base pivot point (165) and the lever handle (168); and
wherein the clamp arm (140) is movable from the disengaged position (178) to the over-center position (368) by pulling the lever handle (168) until the linkage-lever pivot point (176) moves past a dead center position (180) in which the lever-base pivot point (165), linkage-arm pivot point (174), and linkage-lever pivot point (176) are aligned with each other.

3. The toggle clamp tool system (100) of Claim 2, wherein:
the clamp base (108) has a clamp attach fitting (116) configured to be removably coupled to the mounting point (406) on the structure (400); and
the lever (160) of each toggle clamp (102; 104, 106) has a U-shaped configuration that crosses over the clamp arm (140) in a manner positioning the lever handle (168) on a same side of the clamp arm (140) as the clamp attach fitting (116).

4. The toggle clamp tool system (100) of any one of Claims 1-3, wherein:
at least one of the toggle clamps (102; 104, 106) has a compression adjustment mechanism (202) having a compression pad (204), and the compression adjustment mechanism (202) is configured for adjusting clamping pressure of the compression pad (204) against the surface (404) when the clamp arm (140) is moved into the over-center position (368).

5. The toggle clamp tool system (100) of any one of Claims 1-4, wherein the clamp base (108) comprises:
a base arm (114) having a base upper portion (110), and the base upper portion (110) includes a clamp attach fitting (116) configured to be attached to the mounting point (406) on the structure (400), and the clamp arm (140) is pivotably coupled to the base arm (114) at an arm-base pivot point (406); and
a pair of base side plates (118) mounted on opposite sides of the base arm (114) and defining a side plate gap (120) configured to receive the clamp arm (140) at the arm-base pivot point (406).

6. The toggle clamp tool system (100) of any one of Claims 1-5, wherein:
the clamp base (108) includes one or more assembly pins (128) extending through the clamp base (108); and
the tool (300) has a pair of tool feet (330) and each tool foot (330) contains one or more notches (334) configured to be respectively received on the one or more assembly pins (128) in the clamp base (108), to thereby support the tool (300) on the toggle clamps (102; 104, 106).

7. The toggle clamp tool system (100) of any one of Claims 1-6, wherein:
the tool (300) comprises a platform (304).

8. The toggle clamp tool system (100) of Claim 7, further comprising:
a debris tray (342) configured to collect debris that falls onto the platform (304), and the platform (304) has a platform opening (338) configured to receive the debris tray (342).

9. The toggle clamp tool system (100) of Claim 7 or 8, further comprising:
a cover plate (346) configured to be removably mounted on the platform (304) in a manner increasing an effective length of the platform (304).

10. The toggle clamp tool system (100) of Claim 7, 8 or 9, further comprising:
an extender plate (360) configured to be installed on the platform (304) and slid in a lengthwise direction in a manner increasing an effective length of the platform (304).

11. A method of coupling a platform (304) to a structure (400), comprising:
coupling a clamp base (108) of each of a pair of toggle clamps (102; 104, 106) to one of a pair of mounting points (406) spaced apart from each other on a structure (400);
pivoting a clamp arm (140) of each of the toggle clamps (102; 104, 106) about an arm-base pivot point (406) to move the clamp arm (140) from a disengaged position (178) to an over-center position (368) in which the clamp arm (140) is unable to pivot in an opposite direction back toward the disengaged position (178) when a clamp foot (144) on an end of the clamp arm (140) is in contact with a surface (404) of the structure (400); and
mounting a tool (300) on the pair of toggle clamps (102; 104, 106).

12. The method of Claim 11, wherein pivoting the clamp arm (140) of each toggle clamp (102; 104, 106) from the disengaged position (178) to the over-center position (368) comprises:
pulling a lever handle (168) on an end of a lever (160) pivotably coupled to the clamp base (108) at a lever-base pivot point (165);
wherein the lever (160) is coupled to the clamp arm (140) via a linkage (170) coupled at one end to the clamp arm (140) at a linkage-arm pivot point (174) located between the arm-base pivot point (406) and the clamp foot (144), and coupled at an opposite end to the lever (160) at a linkage-lever pivot point (176) located between the lever-base pivot point (165) and the lever handle (168); and
the clamp arm (140) is movable from the disengaged position (178) to the over-center position (368) by pulling the lever handle (168) until the linkage-lever pivot point (176) moves past a dead center position (180) in which the lever-base pivot point (165), linkage-arm pivot point (174), and linkage-lever pivot point (176) are aligned with each other, optionally, wherein pulling the lever handle (168) comprises:
pulling the lever handle (168) on the lever (160), which has a U-shaped configuration that crosses over the clamp arm (140) in a manner positioning the lever handle (168) on a same side of the clamp arm (140) as a clamp attach fitting (116) of the clamp base (108) and which is removably coupled to the mounting point (406) on the structure (400).

13. The method of Claim 11 or 12, further comprising:
adjusting, via a compression adjustment mechanism (202), clamping pressure of a compression pad (204) against the surface (404) of the structure (400) when moving the clamp arm (140) into the over-center position (368).

14. The method of Claim 11, 12 or 13, wherein coupling the clamp base (108) of each toggle clamp (102; 104, 106) to one of the mounting points (406) on the structure (400) comprises:
installing a removable pin (124) through a clamp attach fitting (116) of the clamp base (108) and into a mounting tab (410) protruding from the structure (400).

15. The method of Claim 11, 12, 13, or 14, wherein mounting the tool (300) on the toggle clamps (102; 104, 106) comprises:
engaging notches (334) in tool feet (330) with assembly pins (128) in the clamp base (108).
